# EUROPEAN PATENT SPECIFICATION

(11) **EP 4 546 299 B1**
(45) Date of publication and mention of the grant of the patent: **14.10.2026**
(21) Application number: 24206316.2
(22) Date of filing: 14.10.2024
(51) Int. Cl.: G07F 7/06, G06Q 10/087, A63B 47/00, A63B 47/02, G06Q 20/18, G07F 17/32, G07F 11/44, G06Q 10/0837, G06Q 20/20, G06Q 30/0208, G06Q 30/0238, G07F 9/00, G07F 17/38, A63B 24/00

(54) **PROCEDURE AND MACHINE FOR COLLECTING USED TENNIS BALLS AND DISTRIBUTING NEW BALLS AS A PRIZE**
VERFAHREN UND VORRICHTUNG ZUM SAMMELN VON GEBRAUCHTEN TENNISBÄLLEN UND ZUM VERTEILEN NEUER BÄLLE ALS PREIS
PROCÉDÉ ET MACHINE POUR COLLECTER DES BALLES DE TENNIS USAGÉES ET DISTRIBUER DE NOUVELLES BALLES COMME PRIX

(30) Priority: 25.10.2023 IT 202300022320
(43) Date of publication of application: 30.04.2025
(73) Proprietor: Space Green Srls, 31040 Volpago del Montello (TV) (IT)
(72) Inventor: ZANATTA, Stefano, 31040 VOLPAGO DEL MONTELLO (TV) (IT)
(74) Representative: Burchielli, Riccardo

(56) References cited:
- WO-A1-93/00644
- CN-A- 112 767 604
- US-A1- 2011 259 907
- US-A1- 2017 372 555
- US-A1- 2022 139 146
- US-B1- 10 463 923

## Description

The present invention relates, in general, to an electronic machine and related procedure, to be placed at sporting areas, for collecting one or more used tennis balls, and for distributing new balls as a prize for the user/sportsman, who has collected and destined for recycling a defined number of exhausted used balls.

More particularly, the invention relates to a machine comprising a section for collecting exhausted used balls and a section for distributing new balls; both sections are controlled by an electronic circuit and related firmware. An electronic device, such as a smartphone, which is in use by the user/sportsman, is connected to the electronic circuit of the machine via wireless transmission, where a dedicated software application (App) operates. The aforementioned software application (App) manages the operations of collecting and distributing prizes and connects to an online server, in order to communicate data relating to the user, the number of balls collected, the number of prizes connected, etc.

The machine is made externally of metal material and internally of metal and/or plastic components.

There are various types of ball collection machines on the market, mainly for the sport of golf and, to a lower extent, for tennis and table tennis, and they are intended to cover medium to large playing areas by facilitating the collection activity for the personnel in charge, as set forth in prior art patent documents CN206285446, CN217593747, CN216855636, CN2169768, CN213432874, CN112604247, CN112263817, CN210186377, which relate to the collection of golf and tennis balls. The documents CN206700642, CN115501560, CN216603974, CN212347632 relate to the collection of table tennis balls, while no prior patent documents were found relating to machines for collecting balls in padel courts.

The relevant prior art also comprises patent documents US2017/372555A1, WO93/00644A1, CN112767604A, US10463923B1, US2011/259907A1 and US20227139146A1.

The prior art document US2017/372555A1 discloses a semi-automated propane canister distribution system for distributing and exchanging propane canisters. The prior art document WO93/00644A1 discloses a system for inventorying returned garments.

The main aim of this invention is to incentivise athletes to collect their exhausted used balls in order to reduce their dispersion in the environment, to collaborate in their recycling, and to be rewarded for this action with a number of new balls, generating a series of behaviours in line with the circular economy directives and with the necessary environmental protection, as well as being an example of positive behaviour for all the people who frequent the sports area.

Another aim of this invention is to make possible an activity dedicated to the recycling of different types of balls; for example, tennis balls could be reused to create building panels (such as those indicated in documents IT102021000011030 and IT102021000011045) or destined for similar scrap collection facilities, such as, for example, footwear and/or textile processing, as indicated by the European Community, to be then recycled.

Still, another aim of this invention is to make possible a collection activity of balls that have become waste to be disposed of with limited costs, being supported by digital procedures.

No machines similar to the present invention are known or do not exist on the market.

These and other aims, which will appear more clearly later in the discussion, are achieved by an electronic machine comprising a section for collecting used balls and a section for distributing new balls, both of which are operated by an electronic circuit connected in wireless transmission with electronic devices, such as, for example, a smartphone, wherein a dedicated software application (App) operates, and wherein said device also connects to a server in the cloud, according to claim 1 attached hereto.

Further detailed technical specifications are contained in the subsequent dependent claims.

It is therefore object of the present invention a procedure for collecting one or more exhausted or used tennis ball and for distributing one or more new tennis ball as a prize, implemented by a machine comprising a first section equipped with means for inserting and distributing new tennis balls as a prize following the insertion of said used tennis balls by a user, and a second section equipped with means for inserting and collecting used tennis balls.

Advantageously, the procedure is also implemented through a software application, present in a smartphone in use by the user and configured to manage the transmission of data with a server in cloud where are present databases in which are stored data relating to the users, to the number of used tennis balls inserted in the machine by each user and to the number of prizes distributed to each user.

Still advantageously, the procedure is also implemented through an electronic circuit comprising a microprocessor configured to manage the activities of said machine and the transmission of data towards the smartphone in use by the user, a chip for wireless transmissions, for example of the Bluetooth^{®} type, a management chip of said means for inserting and distributing one or more used tennis balls, a management chip of the means for inserting and distributing one or more new tennis balls as a prize, and a management chip of a camera which is adjacent to the means for inserting and collecting one or more used tennis balls.

In an advantageously way, the procedure provides for the steps of:
- recognition of the user by means of software application which sends to server in cloud the data relating to the user, recognises the user, verifies that the user is actually inserting one or more exhausted tennis balls and, if so, opens a door of the second section of the machine;
- insertion of said used tennis balls by the user,
- counting of the number of used tennis balls inserted into the machine by the user by means of the electronic circuit and sending of the number, by means of the chip for wireless transmissions, to the software application, which sends the number to the server in cloud;
- distribution of one or more new tennis balls as a prize, by means of a prize acquisition communication which is sent by the server in cloud to the software application present in the smartphone in use by the user upon exceeding a defined number of used tennis balls inserted in the machine by the user;
- recognition of the user;
- allowing the picking up of one or more new tennis balls as a prize in the event of the effective recognition of the user;
- picking up one or more new tennis balls as a prize from the user by means of the means of distribution of the first section of the machine.

Preferably, the used tennis balls present in the machine are collected and the machine is emptied, the collection and emptying steps being carried out by a disposal operator, who is informed, by means of a specific software application present on his smartphone and by means of the server in cloud, when the machine is full of used tennis balls.

In a preferred embodiment, the means for inserting and distributing one or more new tennis balls comprise a door for inserting one or more new tennis balls by an insertion operator and a door for distributing one or more new tennis balls.

In a further preferred embodiment, the means for inserting and collecting one or more used tennis balls comprise a door from which one or more used tennis balls are picked up and collected by the disposal operator, said one or more used tennis balls, destined for a collection and recycling centre, and a door from which one or more used tennis balls are inserted by the user.

Other features and advantages of the invention will be more evident from the description of some preferred and exemplary, but not limiting, embodiments of the invention and from the accompanying drawing tables, where:

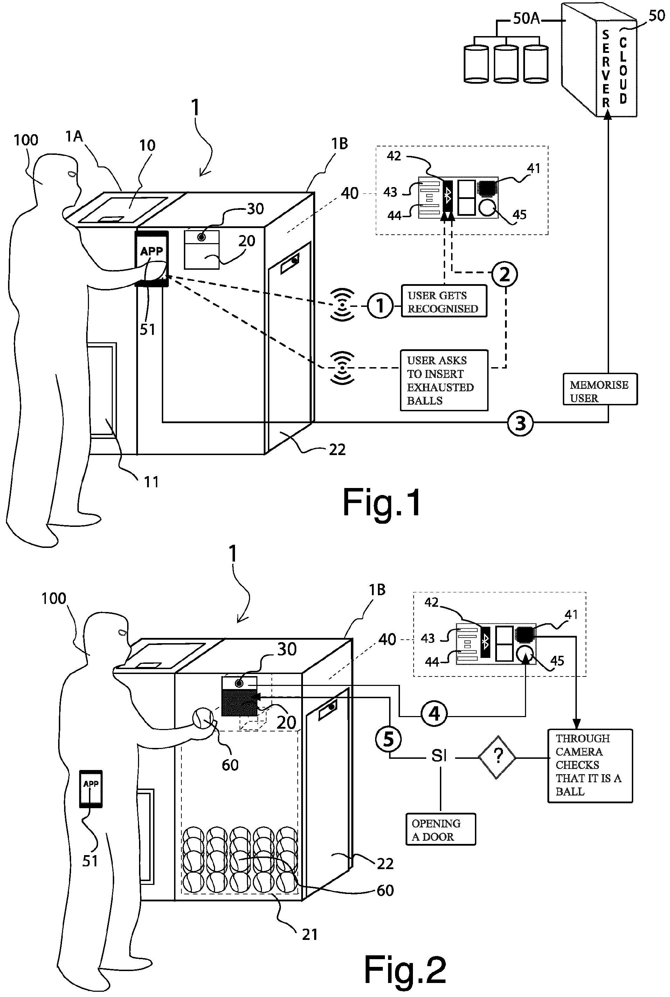

- figure 1 represents a frontal view of the machine divided into a section on the left dedicated to the distribution of the prizes and a section on the right dedicated to the collection of the used balls and comprising an electronic circuit, wherein the user, by means of a software application (App), performs the first phase of the procedure for the insertion/deposit of the used balls, according to the present invention;
- figure 2 represents a frontal view of the steps of verifying the real presence of a tennis ball by means of a camera and the opening of the door enabling the insertion/deposit/collection, according to the present invention;

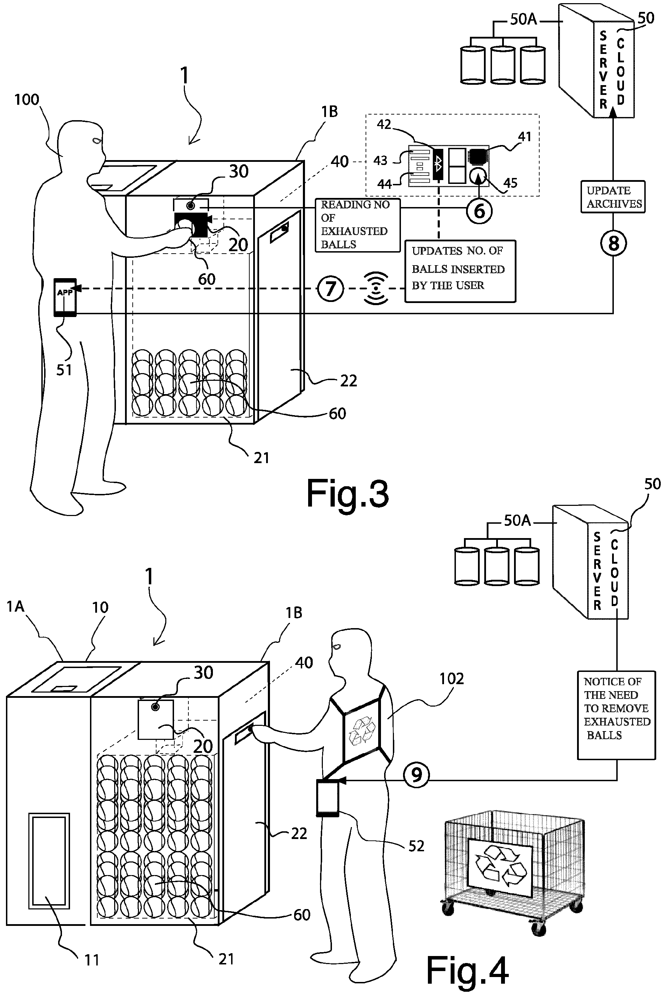

- figure 3 represents a frontal view of the steps of inserting/depositing/collecting the ball(s), which are counted and associated with the user, according to the present invention;
- figure 4 represents a frontal view of the steps of picking up, by a enabled operator, the used balls to send them to a collection centre for their recycling, according to the present invention;

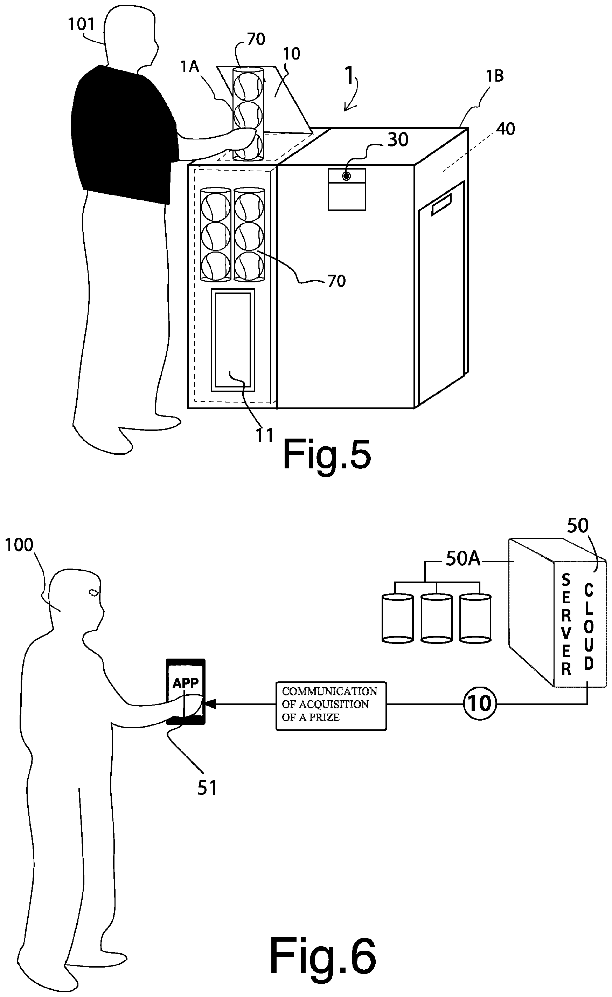

- figure 5 represents a frontal view of the internal components of the machine and the action of reloading prizes, according to the present invention;
- figure 6 represents a schematic view of the steps in which the user is informed of the winning of the prize by means of the software application (App) in their smartphone, according to the present invention;

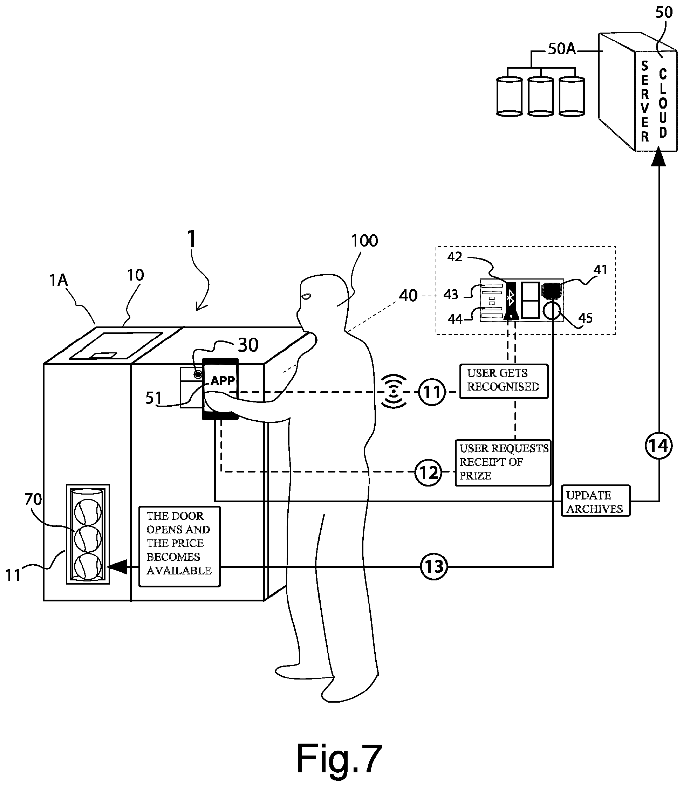

- figure 7 represents a schematic view of the steps in the procedure of distributing the prize to the user, according to the present invention.

With reference to the attached figures, the electronic machine (1), normally made of metal and with internal components made of metal and/or plastic material, comprises a section 1A intended for the distribution of a prize (70) in exchange for a quantity of used or exhausted balls, for example tennis balls (60), which are inserted/deposited in the section 1B of the machine (1), by a user/sportsman (100). Section 1A externally provides two doors, wherein the upper door (10) is used to insert the prizes, for example a pack of three new balls (70), by a user/sportsman (101), and the lower front door (11) is used to distribute the prize (70).

Section 1B externally provides for a door (22), which serves to pick up and collect, by an authorised operator (102), the exhausted balls to be sent to a collection centre for their recycling, and, frontally, a camera (30) located near the sliding door (20), which allows one or more used balls (60) to be inserted/deposited by the user/sportsman (100). In this section, but may also be in section 1A, there is an electronic circuit (40) comprising at least a microprocessor (41), a chip for wireless transmissions, for example of the Bluetooth^{®} type, a management chip (43) for the door for inserting/depositing the used balls (60), a management chip (44) for the prize distribution door and a management chip (45) for the camera (30). This electronic circuit (40) manages the activities of the electronic machine (1) and the transmission of data to an electronic device, such as a smartphone in use by the user/sportsman (100), where a software application (App) (51) is present. Said software application (App) also manages data transmission with a server in cloud (50), wherein databases (50A) are present to store users, the number of balls inserted/deposited per user, the number of prizes distributed per user, etc. Thanks to this hardware and software configuration, it is possible to implement the procedures for inserting/depositing one or more used or exhausted balls (60), collection for disposal of the used balls (60) and distribution of the prize (70).

The procedure for inserting/depositing one or more used balls (60) involves the user/sportsman (100) approaching the electronic machine (1), asking, via the software application (51) on their smartphone to be recognised (step 1) and to be able to proceed to insert/deposit the used balls (60) (step 2). The software application (51) sends information about the user/sportsman (100) engaged in this activity to the server in cloud (50), which is stored in the databases (50A) (step 3). The firmware present on the electronic circuit (40), after recognising the user/sportsman (100), verifies whether the part that the user/sportsman wants to insert/deposit is indeed a ball, in this case a tennis ball (60), in order to avoid the insertion of inappropriate and/or dangerous materials (step 4), and, if confirmed that it is a ball, for example a tennis ball (60), opens the door (step 5).

Each used tennis ball (60) entered by the user/sportsman (100) is counted by the firmware of the electronic circuit (40) via the camera (30) (step 6); this data will be sent with wireless transmissions (42) to the software application (51) (step 7), which will send this information to the server in cloud (50), where the databases (50A) (step 8) will be updated.

The collection procedure for the disposal of the used tennis balls (60) present in the electronic machine (1) provides that a disposal operator (102) is informed of the need to empty a bin (21) full of used tennis balls (60) on his smartphone, where a software application (App) (52) is installed, via the server in cloud (50) (step 9) and that the same operator implements this activity by opening the door (22) of section 1B of the electronic machine (1).

The procedure for distributing the prize (70), such as a package of new balls, provides that the prize intended for the user/sportsman (100) who has inserted/deposited a defined number of used balls (60) is first duly inserted within section 1A of the electronic machine (1) by an operator (101), via the door (10); furthermore, the communication of acquisition of the prize is sent from the server in cloud (50) to the software application (App) (51) in use by the user/sportsman (100) (step 10). The user/sportsman (100), at this point, will approach the electronic machine (1), asking via the software application (51) on his smartphone to be recognised and request the distribution of the prize (70) (phases 11, 12). If the user/sportsman (100) is recognised, the firmware of the electronic circuit (40) will open the door (11) allowing the prize (70) to be picked up (phase 13).

Advantageously, the procedure according to the invention differs from the prior art in that it describes a method which allows the collection of used tennis balls and distributes a prize (new balls) to a user when the user inserts a number of used tennis balls above a defined threshold. This enhances and facilitates the collection of used balls by distributing a prize to users who enter a defined number of used balls.

Advantageously, the method according to the invention makes it possible to identify the user and monitor his or her actions, in particular by monitoring the insertions of spent balls so that new balls can be dispensed when a threshold is exceeded (defined number of spent balls inserted) and to alert an attendant if the machine (1) is full.

The present invention thus provides an incentive for the collection of used balls, limiting environmental pollution due to the dispersion of balls that can no longer be used in the environment by rewarding those users who actively engage and insert the used balls into the machine (1).

The invention thus conceived and illustrated herein is susceptible to numerous modifications and variations, all within the scope of the inventive concept as defined by the appended claims.

Furthermore, all details may be replaced by other technically equivalent elements. Finally, the components used, provided they are compatible with the specific use, as well as the dimensions, may be any according to the requirements and state of the art.

Where features and techniques mentioned in any of the claims are followed by reference marks, such reference marks have been included for the sole purpose of increasing the intelligibility of the claims and, consequently, have no limiting effect on the interpretation of each element identified, by way of example, by the same.

## Claims

1. Procedure for collecting one or more used tennis balls (60) and for distributing one or more new tennis balls (70) as a prize, wherein said procedure is implemented by:
• a machine (1) comprising a first section (1A), which is equipped with means (10, 11) for inserting and distributing said one or more new tennis balls (70) as a prize following the insertion of said one or more used tennis balls (60) by a user (100), and a second section (1B), which is equipped with means (20, 22) for inserting and collecting said one or more used tennis balls (60), wherein said means (20, 22) comprise a sliding door (20);
• a software application (51), present in a smartphone in use by the user (100) and configured to manage the transmission of data with a server in cloud (50) where are present databases (50A) in which are stored data relating to the users, to the number of used tennis balls (60) inserted in the machine (1) by each user (100) and to the number of prizes distributed to each user (100);
• an electronic circuit (40), which comprises:
∘ a microprocessor (41) configured to manage the activities of said machine (1) and the transmission of data towards the smartphone in use by the user (100),
∘ a chip for wireless transmissions (42) of the Bluetooth^{®} type,
∘ a management chip (43) of said means (20) for inserting and distributing said one or more used tennis balls (60),
∘ a management chip (44) of said means (10, 11) for inserting and distributing said one or more new tennis balls (70) as a prize, and
∘ a management chip (45) of a camera (30) which is adjacent to said sliding door (20) of said means (20, 22) for inserting and collecting said one or more used tennis balls (60);
and wherein said procedure provides for the chronological steps of:
• a first recognition of the user (100), by means of said software application (51) which sends to said server in cloud (50) the data relating to the user (100) and recognises the user (100);
• verifying, by means of the camera (30) located adjacent to the sliding door (20) and the firmware present on the electronic circuit (40), whether the object that the recognized user (100) wants to insert through the sliding door (20) is indeed a tennis ball (60), in order to avoid the insertion of inappropriate and/or dangerous materials;
• upon confirmation that the object is a tennis ball (60), opening said sliding door (20) of said second section (1B) under the control of the microprocessor (41) of the electronic circuit (40);
• insertion of said one or more used tennis balls (60) by the user (100) through the opened sliding door (20);
• counting each entered used tennis ball (60) by the firmware of the electronic circuit (40) via the camera (30);
• sending the counted number of inserted tennis balls, by means of said chip for wireless transmissions (42), from the electronic circuit (40) to said software application (51) on the smartphone, which in turn sends said counted number to said server in cloud (50) to update the databases (50A);
• wherein upon exceeding a defined number of used tennis balls (60) inserted in the machine (1) by the user (100) stored in the databases (50A), the server in cloud (50) sends a prize acquisition communication to the software application (51) present in the smartphone in use by the user (100), enabling the distribution of said one or more new tennis balls (70) as a prize;
• a second recognition of the user (100), by means of said software application (51), to request the distribution of the prize (70);
• allowing the picking up of said one or more new tennis balls (70) as a prize in the event of the effective recognition of the user (100) by means of said means of distribution of said first section (1A) of the machine (1);
• picking up said one or more new tennis balls (70) as a prize by the user (100) by means of said means of distribution (11) of said first section (1A) of the machine (1).

2. Procedure according to claim 1, **characterised in that** said used tennis balls (60) present in the machine (1) are collected and said machine (1) is emptied, said collection and emptying steps being carried out by a disposal operator (102), who is informed, by means of a specific software application (52) present on his smartphone and by means of said server in cloud (50), when the machine (1) is full of used tennis balls (60).

3. Procedure according to claim 1, **characterised in that** said means (10, 11) for inserting and distributing said one or more new tennis balls (70) comprise a door (10) for inserting said one or more new tennis balls (70) by an insertion operator (101) and a door (11) for distributing said one or more new tennis balls (70).

4. Procedure according to claim 2, **characterised in that** said means (20, 22) for inserting and collecting said one or more used tennis balls (60) comprise a door from which said one or more used tennis balls (60) are picked up and collected by said disposal operator (102), said one or more used tennis balls (60), destined for a collection and recycling centre, and a door from which said one or more used tennis balls (60) are inserted by said user (100).

## Patentansprüche

1. Verfahren zum Sammeln eines oder mehrerer gebrauchter Tennisbälle (60) und zum Verteilen eines oder mehrerer neuer Tennisbälle (70) als Preis, wobei das Verfahren durchgeführt wird mittels:
• einer Vorrichtung (1), umfassend einen ersten Abschnitt (1A), der mit Mitteln (10, 11) zum Einfüllen und Verteilen des einen oder der mehreren neuen Tennisbälle (70) als Preis infolge des Einwerfens des einen oder der mehreren gebrauchten Tennisbälle (60) durch einen Benutzer (100) ausgestattet ist, und einen zweiten Abschnitt (1B), der mit Mitteln (20, 22) zum Einwerfen und Sammeln des einen oder der mehreren gebrauchten Tennisbälle (60) ausgestattet ist, wobei die Mittel (20, 22) eine Schiebetür (20) umfassen;
• einer Softwareanwendung (51), die auf einem von dem Benutzer (100) verwendeten Smartphone vorhanden und dazu ausgebildet ist, die Übertragung von Daten mit einem Cloud-Server (50) zu verwalten, auf dem Datenbanken (50A) vorhanden sind, in denen Daten bezüglich der Benutzer, der Anzahl der von jedem Benutzer (100) in die Vorrichtung (1) eingeworfenen gebrauchten Tennisbälle (60) und der Anzahl der an jeden Benutzer (100) verteilten Preise gespeichert sind;
• einer elektronischen Schaltung (40), die umfasst:
∘ einen Mikroprozessor (41), der dazu ausgebildet ist, die Aktivitäten der Vorrichtung (1) und die Übertragung von Daten an das von dem Benutzer (100) verwendete Smartphone zu verwalten,
∘ einen Chip für drahtlose Übertragungen (42) vom Typ Bluetooth^{®},
∘ einen Verwaltungschip (43) für die Mittel (20) zum Einwerfen und Verteilen des einen oder der mehreren gebrauchten Tennisbälle (60),
∘ einen Verwaltungschip (44) für die Mittel (10, 11) zum Einfüllen und Verteilen des einen oder der mehreren neuen Tennisbälle (70) als Preis, und
∘ einen Verwaltungschip (45) für eine Kamera (30), die benachbart zu der Schiebetür (20) der Mittel (20, 22) zum Einwerfen und Sammeln des einen oder der mehreren gebrauchten Tennisbälle (60) angeordnet ist;
wobei das Verfahren die folgenden chronologischen Schritte vorsieht:
• eine erste Erkennung des Benutzers (100) mittels der Softwareanwendung (51), die die den Benutzer (100) betreffenden Daten an den Cloud-Server (50) sendet und den Benutzer (100) erkennt;
• Überprüfen mittels der benachbart zu der Schiebetür (20) angeordneten Kamera (30) und der auf der elektronischen Schaltung (40) vorhandenen Firmware, ob der Gegenstand, den der erkannte Benutzer (100) durch die Schiebetür (20) einwerfen möchte, tatsächlich ein Tennisball (60) ist, um das Einwerfen ungeeigneter und/oder gefährlicher Materialien zu vermeiden;
• nach Bestätigung, dass der Gegenstand ein Tennisball (60) ist, Öffnen der Schiebetür (20) des zweiten Abschnitts (1B) unter der Steuerung des Mikroprozessors (41) der elektronischen Schaltung (40);
• Einwerfen des einen oder der mehreren gebrauchten Tennisbälle (60) durch den Benutzer (100) durch die geöffnete Schiebetür (20);
• Zählen jedes eingeworfenen gebrauchten Tennisballs (60) durch die Firmware der elektronischen Schaltung (40) mittels der Kamera (30);
• Senden der gezählten Anzahl der eingeworfenen Tennisbälle mittels des Chips für drahtlose Übertragungen (42) von der elektronischen Schaltung (40) an die Softwareanwendung (51) auf dem Smartphone, die ihrerseits die gezählte Anzahl an den Cloud-Server (50) sendet, um die Datenbanken (50A) zu aktualisieren;
• wobei bei Überschreiten einer festgelegten Anzahl von durch den Benutzer (100) in die Vorrichtung (1) eingeworfenen gebrauchten Tennisbällen (60), die in den Datenbanken (50A) gespeichert ist, der Cloud-Server (50) eine Mitteilung über den Erwerb eines Preises an die auf dem von dem Benutzer (100) verwendeten Smartphone vorhandene Softwareanwendung (51) sendet, wodurch die Verteilung des einen oder der mehreren neuen Tennisbälle (70) als Preis ermöglicht wird;
• eine zweite Erkennung des Benutzers (100) mittels der Softwareanwendung (51), um die Verteilung des Preises (70) anzufordern;
• Ermöglichen der Entnahme des einen oder der mehreren neuen Tennisbälle (70) als Preis im Falle der erfolgreichen Erkennung des Benutzers (100) mittels der Verteilungsmittel des ersten Abschnitts (1A) der Vorrichtung (1);
• Entnehmen des einen oder der mehreren neuen Tennisbälle (70) als Preis durch den Benutzer (100) mittels der Verteilungsmittel (11) des ersten Abschnitts (1A) der Vorrichtung (1).

2. Verfahren nach Anspruch 1, **dadurch gekennzeichnet, dass** die in der Vorrichtung (1) vorhandenen gebrauchten Tennisbälle (60) gesammelt werden und die Vorrichtung (1) entleert wird, wobei die Schritte des Sammelns und Entleerens durch einen Entsorgungsmitarbeiter (102) durchgeführt werden, der mittels einer spezifischen Softwareanwendung (52), die auf seinem Smartphone vorhanden ist, und mittels des Cloud-Servers (50) darüber informiert wird, wenn die Vorrichtung (1) mit gebrauchten Tennisbällen (60) gefüllt ist.

3. Verfahren nach Anspruch 1, **dadurch gekennzeichnet, dass** die Mittel (10, 11) zum Einfüllen und Verteilen des einen oder der mehreren neuen Tennisbälle (70) eine Tür (10) zum Einfüllen des einen oder der mehreren neuen Tennisbälle (70) durch einen Befüllungsmitarbeiter (101) und eine Tür (11) zum Verteilen des einen oder der mehreren neuen Tennisbälle (70) umfassen.

4. Verfahren nach Anspruch 2, **dadurch gekennzeichnet, dass** die Mittel (20, 22) zum Einwerfen und Sammeln des einen oder der mehreren gebrauchten Tennisbälle (60) eine Tür, aus der der eine oder die mehreren gebrauchten Tennisbälle (60) durch den Entsorgungsmitarbeiter (102) entnommen und gesammelt werden, wobei der eine oder die mehreren gebrauchten Tennisbälle (60) für eine Sammel- und Recyclingstelle bestimmt sind, und eine Tür umfassen, durch die der eine oder die mehreren gebrauchten Tennisbälle (60) durch den Benutzer (100) eingeworfen werden.

## Revendications

1. Procédé pour collecter une ou plusieurs balles de tennis usagées (60) et pour distribuer une ou plusieurs nouvelles balles de tennis (70) comme prix, dans lequel ledit procédé est mis en œuvre au moyen de :
• une machine (1) comprenant une première section (1A), qui est équipée de moyens (10, 11) pour insérer et distribuer lesdites une ou plusieurs nouvelles balles de tennis (70) comme prix à la suite de l'insertion desdites une ou plusieurs balles de tennis usagées (60) par un utilisateur (100), et une seconde section (1B), qui est équipée de moyens (20, 22) pour insérer et collecter lesdites une ou plusieurs balles de tennis usagées (60), dans lequel lesdits moyens (20, 22) comprennent une porte coulissante (20);
• une application logicielle (51), présente dans un smartphone utilisé par l'utilisateur (100) et configurée pour gérer la transmission de données avec un serveur dans le cloud (50), dans lequel sont présentes des bases de données (50A) dans lesquelles sont stockées des données relatives aux utilisateurs, au nombre de balles de tennis usagées (60) insérées dans la machine (1) par chaque utilisateur (100) et au nombre de prix distribués à chaque utilisateur (100) ;
• un circuit électronique (40), qui comprend :
∘ un microprocesseur (41) configuré pour gérer les activités de ladite machine (1) et la transmission de données vers le smartphone utilisé par l'utilisateur (100),
∘ une puce pour transmissions sans fil (42) de type Bluetooth^{®},
∘ une puce de gestion (43) desdits moyens (20) pour insérer et distribuer lesdites une ou plusieurs balles de tennis usagées (60),
∘ une puce de gestion (44) desdits moyens (10, 11) pour insérer et distribuer lesdites une ou plusieurs nouvelles balles de tennis (70) comme prix, et
∘ une puce de gestion (45) d'une caméra (30) qui est adjacente à ladite porte coulissante (20) desdits moyens (20, 22) pour insérer et collecter lesdites une ou plusieurs balles de tennis usagées (60) ;
et dans lequel ledit procédé prévoit les étapes chronologiques suivantes :
• une première reconnaissance de l'utilisateur (100), au moyen de ladite application logicielle (51) qui envoie audit serveur dans le cloud (50) les données relatives à l'utilisateur (100), et reconnaît l'utilisateur (100) ;
• vérifier, au moyen de la caméra (30) située à proximité de la porte coulissante (20) et du micrologiciel présent sur le circuit électronique (40), que l'objet que l'utilisateur (100) reconnu souhaite insérer à travers la porte coulissante (20) est effectivement une balle de tennis (60), afin d'éviter l'insertion de matériaux inappropriés et/ou dangereux ;
• après confirmation que l'objet est une balle de tennis (60), ouvrir ladite porte coulissante (20) de ladite seconde section (1B) sous la commande du microprocesseur (41) du circuit électronique (40) ;
• l'insertion desdites une ou plusieurs balles de tennis usagées (60) par l'utilisateur (100) à travers la porte coulissante (20) ouverte ;
• compter chaque balle de tennis usagée (60) insérée par le micrologiciel du circuit électronique (40) au moyen de la caméra (30) ;
• envoyer le nombre compté de balles de tennis insérées, au moyen de ladite puce pour transmissions sans fil (42), depuis le circuit électronique (40) vers ladite application logicielle (51) sur le smartphone, laquelle envoie à son tour ledit nombre compté audit serveur dans le cloud (50) afin de mettre à jour les bases de données (50A) ;
• dans lequel, lorsqu'un nombre défini de balles de tennis usagées (60) insérées dans la machine (1) par l'utilisateur (100), stocké dans les bases de données (50A), est dépassé, le serveur dans le cloud (50) envoie une communication d'acquisition d'un prix à l'application logicielle (51) présente dans le smartphone utilisé par l'utilisateur (100), permettant la distribution desdites une ou plusieurs nouvelles balles de tennis (70) comme prix ;
• une seconde reconnaissance de l'utilisateur (100), au moyen de ladite application logicielle (51), afin de demander la distribution du prix (70) ;
• autoriser le retirement desdites une ou plusieurs nouvelles balles de tennis (70) comme prix en cas de reconnaissance effective de l'utilisateur (100), au moyen desdits moyens de distribution de ladite première section (1A) de la machine (1) ;
• retirer lesdites une ou plusieurs nouvelles balles de tennis (70) comme prix par l'utilisateur (100), au moyen desdits moyens de distribution (11) de ladite première section (1A) de la machine (1).

2. Procédé selon la revendication 1, **caractérisé en ce que** lesdites balles de tennis usagées (60) présentes dans la machine (1) sont collectées et ladite machine (1) est vidée, lesdites étapes de collecte et de vidage étant effectuées par un opérateur d'évacuation (102), qui est informé, au moyen d'une application logicielle spécifique (52) présente sur son smartphone et au moyen dudit serveur dans le cloud (50), lorsque la machine (1) est pleine de balles de tennis usagées (60).

3. Procédé selon la revendication 1, **caractérisé en ce que** lesdits moyens (10, 11) pour insérer et distribuer lesdites une ou plusieurs nouvelles balles de tennis (70) comprennent une porte (10) destinée à l'insertion desdites une ou plusieurs nouvelles balles de tennis (70) par un opérateur d'insertion (101) et une porte (11) destinée à la distribution desdites une ou plusieurs nouvelles balles de tennis (70).

4. Procédé selon la revendication 2, **caractérisé en ce que** lesdits moyens (20, 22) pour insérer et collecter lesdites une ou plusieurs balles de tennis usagées (60) comprennent une porte depuis laquelle lesdites une ou plusieurs balles de tennis usagées (60) sont retirées et collectées par ledit opérateur d'évacuation (102), lesdites une ou plusieurs balles de tennis usagées (60) étant destinées à un centre de collecte et de recyclage, et une porte par laquelle lesdites une ou plusieurs balles de tennis usagées (60) sont insérées par ledit utilisateur (100).
